# FASCICULE DE BREVET EUROPEEN

(11) **EP 2 368 329 B1**
(45) Date de publication et mention de la délivrance du brevet: **13.03.2019**
(21) Numéro de dépôt: 09801226.3
(22) Date de dépôt: 11.12.2009
(51) Int. Cl.: H04B 3/54, H04B 3/56

(54) **DISPOSITIF ELECTRONIQUE A COURANT PORTEUR**
ELEKTRONISCHE VORRICHTUNG ZUR NETZLEITUNGSÜBERTRAGUNG
ELECTRONIC DEVICE FOR POWER LINE COMMUNICATIONS

(30) Priorité: 22.12.2008 FR 0807337
(43) Date de publication de la demande: 28.09.2011
(73) Titulaire: SAGEMCOM BROADBAND SAS, 92500 Rueil Malmaison (FR)
(72) Inventeur: HERGAULT, Stéphane, F-92500 Rueil-Malmaison (FR)
(74) Mandataire: Lavialle, Bruno François Stéphane
(86) Numéro de dépôt international: PCT/FR2009/001416
(87) Numéro de publication internationale: WO 2010/072909

(56) Documents cités:
- EP-A- 1 343 253
- EP-A- 1 603 250
- US-A1- 2002 080 010
- US-A1- 2006 044 076

## Description

La présente invention concerne un dispositif électronique destiné à être relié à un réseau d'alimentation fournissant un courant alternatif d'alimentation et un signal de données superposé au courant alternatif d'alimentation. Ce type de transfert d'informations numériques utilisant les lignes électriques est dit à courant porteur en ligne (CPL). Un tel dispositif est par exemple un décodeur de signaux de télévision, une passerelle d'accès à un réseau de type Internet ou tout autre dispositif susceptible d'accéder à un réseau.

Un tel dispositif comprend un boîtier contenant une unité centrale électronique et un module interne d'alimentation relié à l'unité centrale. L'unité centrale est agencée pour traiter des signaux, données et autres informations, effectuer des calculs, commander l'affichage d'images ou la diffusion de sons... Le module interne d'alimentation comprend généralement un convertisseur continu/continu qui délivre un courant présentant des caractéristiques adaptées à l'alimentation de l'unité centrale et des autres composants du dispositif. Le module interne d'alimentation est relié par un câble électrique à un bloc d'alimentation externe pourvu d'un organe de connexion au réseau d'alimentation fournissant le courant d'alimentation alternatif auquel sont superposés les signaux de données, et d'un convertisseur pour transformer le courant alternatif d'alimentation en un courant continu d'alimentation. Il est connu d'avoir un module externe de transmission de données par courant porteur. Le module externe de transmission de données est une interface séparant ou combinant les signaux de données et un courant porteur pour permettre à l'unité centrale d'échanger des données avec le réseau. Le module externe de transmission est pourvu de moyens de son raccordement au réseau d'alimentation et est relié à l'unité centrale par un câble de liaison de type Ethernet. Ceci suppose de disposer de deux prises électriques au voisinage de l'emplacement prévu du dispositif : l'une pour brancher le bloc d'alimentation et l'autre pour brancher le module externe de transmission.

Pour obvier à cet inconvénient, il est connu d'intégrer dans le bloc externe d'alimentation le module de transmission de sorte que le bloc d'alimentation est relié à l'unité centrale par un câble mixte comportant un câble de puissance bifilaire et un câble de liaison Ethernet. Le courant alternatif d'alimentation du dispositif est alors le courant porteur. Le câble mixte, équipé de ses connecteurs spécifiques, est relativement coûteux. En outre, le bloc d'alimentation se révèle relativement encombrant.

Un système connu est présenté dans US2002/080010.

Un but de l'invention est d'obvier aux inconvénients précités.

A cet effet, on prévoit, selon l'invention, un dispositif comprenant un boîtier contenant une unité centrale électronique et un bloc d'alimentation externe relié à l'unité centrale par un câble électrique et pourvu d'un organe de connexion à un réseau d'alimentation fournissant un courant d'alimentation alternatif et un signal de données superposé et d'un convertisseur pour transformer le courant d'alimentation. Le boîtier comprend un module de transmission de données par courant porteur, le convertisseur est relié à l'organe de connexion et au câble électrique par un premier organe d'aiguillage qui extrait et dérive le signal de données par rapport au convertisseur, et le module et l'unité centrale sont reliés au câble électrique par un deuxième organe d'aiguillage pour séparer le courant d'alimentation transformé et le signal de données et amener le courant d'alimentation à l'unité centrale et le signal de données au module de transmission.

Ainsi, le premier organe d'aiguillage sépare le signal de données et le courant d'alimentation pour amener le courant d'alimentation au convertisseur et superposer en sortie du convertisseur le signal de données au courant d'alimentation transformé. Le courant d'alimentation transformé auquel est superposé le signal de données est acheminé via le câble électrique, qui peut être un câble bifilaire classique, au deuxième organe d'aiguillage. Le deuxième organe d'aiguillage sépare le signal de données qu'il transmet au module de transmission et le courant d'alimentation qu'il transmet à l'unité centrale éventuellement via un module d'alimentation interposé. Cette structure permet d'intégrer le module de transmission dans le boîtier du dispositif qui n'est raccordé au réseau d'alimentation que par un organe de connexion unique.

Selon un mode de réalisation particulier, le premier organe d'aiguillage comprend une ligne de dérivation reliant l'organe de connexion au câble électrique et incorporant un filtre de fréquence porteuse, le convertisseur étant relié à la ligne de dérivation de part et d'autre du filtre de fréquence porteuse par une ligne d'entrée et une ligne de sortie du convertisseur, l'organe d'aiguillage comprenant des filtres de fréquence de puissance montés respectivement sur la ligne d'entrée et la ligne de sortie.

Le filtre de fréquence porteuse est par exemple un filtre passe bande ou passe haut agencé pour laisser passer les signaux de données qui ont une fréquence relativement élevée et le filtre de fréquence de puissance est par exemple un filtre passe bas agencé pour laisser passer le courant d'alimentation dont la fréquence est relativement basse (entre 50 et 60 Hz en ce qui concerne le courant d'alimentation alternatif).

Avantageusement, au moins une inductance est montée sur la ligne de dérivation entre le filtre de fréquence porteuse et la ligne de sortie.

Cette inductance permet une meilleure transmission des porteuses plus particulièrement lorsque le filtre de fréquence porteuse est un condensateur.

Avantageusement, le deuxième organe d'aiguillage comprend une première ligne reliée au câble électrique et à laquelle sont reliées une deuxième ligne reliée à l'unité centrale et une troisième ligne reliée au module de transmission, la deuxième ligne étant équipée d'un filtre de fréquence de puissance et la troisième ligne étant équipée d'un filtre de fréquence porteuse.

Ce mode de réalisation est particulièrement simple.

D'autres caractéristiques et avantages de l'invention ressortiront à la lecture de ce qui suit, notamment des modes de réalisation particuliers non limitatifs de l'invention.

Il sera fait référence aux dessins annexés, parmi lesquels :

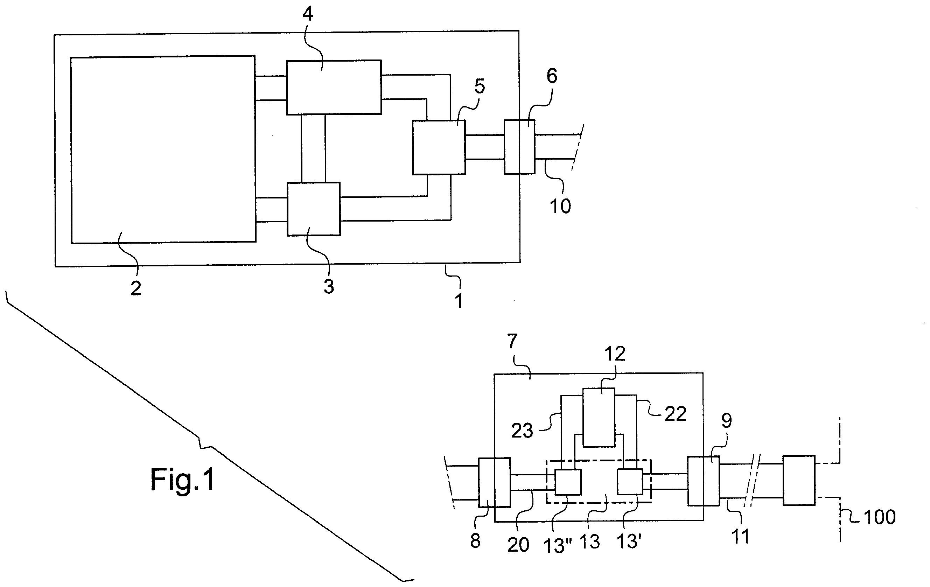

- la figure 1 est une vue schématique du dispositif conforme à l'invention,
- la figure 2 est une vue schématique détaillée de l'élément d'aiguillage 5 de la figure 1,
- la figure 3 est une vue schématique détaillée du bloc d'alimentation selon un premier mode de réalisation de l'invention, qui constitue l'élément 13 de la figure 1,
- la figure 4 est une vue analogue à la figure 3 d'un bloc d'alimentation selon un deuxième mode de réalisation de l'invention, qui constitue l'élément 13 de la figure 1,

Le dispositif conforme à l'invention est par exemple un décodeur de signaux de télévision, une passerelle d'accès à Internet, un routeur... destiné à être relié à au moins un réseau d'alimentation électrique sur lequel transitent des signaux de données superposés à des courants dits porteurs. Ce type de réseau et la technique de transmission des signaux de données, habituellement par multiplexage fréquentiel, sont connus en eux-mêmes et ne seront pas détaillés ici.

En référence aux figures, le dispositif comprend un boîtier 1 contenant une unité centrale 2 électronique, un module de transmission 3 par courant porteur et si nécessaire un module d'alimentation 4 qui sont tous deux reliés à l'unité centrale 2. L'unité centrale 2 comprend, de façon classique, notamment un processeur et une ou plusieurs mémoires contenant un programme d'exploitation exécuté par le processeur pour assurer le fonctionnement du dispositif. Le module d'alimentation 4 comprend un convertisseur continu / continu agencé pour fournir, à l'unité centrale 2, au module de transmission 3 et aux autres composants du dispositif, les tensions nécessaires à leur fonctionnement.

Le module de transmission 3 et le module d'alimentation 4 sont reliés à un organe d'aiguillage 5 lui-même relié à un connecteur 6 de raccordement à un bloc d'alimentation externe 7 pourvu d'un connecteur 8 et d'un connecteur 9. Un câble électrique 10 est raccordé aux connecteurs 6 et 8. Le câble 10 est un câble bifilaire classique, par exemple de type coaxial, et les connecteurs 6, 8 sont des connecteurs à deux pôles. Le connecteur 9 est raccordé à un câble 11 de connexion au réseau d'alimentation 100 fournissant le courant d'alimentation alternatif nécessaire à l'alimentation du dispositif et des signaux de données superposés au courant.

Le bloc d'alimentation externe 7 comprend un convertisseur 12 alternatif / continu pour transformer le courant d'alimentation alternatif en courant d'alimentation continu et d'abaisser sa tension. Le convertisseur 12 est relié aux connecteurs 8 et 9 par un organe d'aiguillage 13.

Les organes d'aiguillages 5 et 13 sont des filtres à trois ports qui permettent de séparer deux bandes de fréquences (les organes d'aiguillages sont plus précisément désignés par le mot « diplexeur » dans le jargon du domaine technique concerné car ils assurent un multiplexage sur deux fréquences : la fréquence du courant d'alimentation et la fréquence porteuse des signaux de données). Les organes d'aiguillages sont ainsi agencés pour séparer le courant d'alimentation et le signal de données.

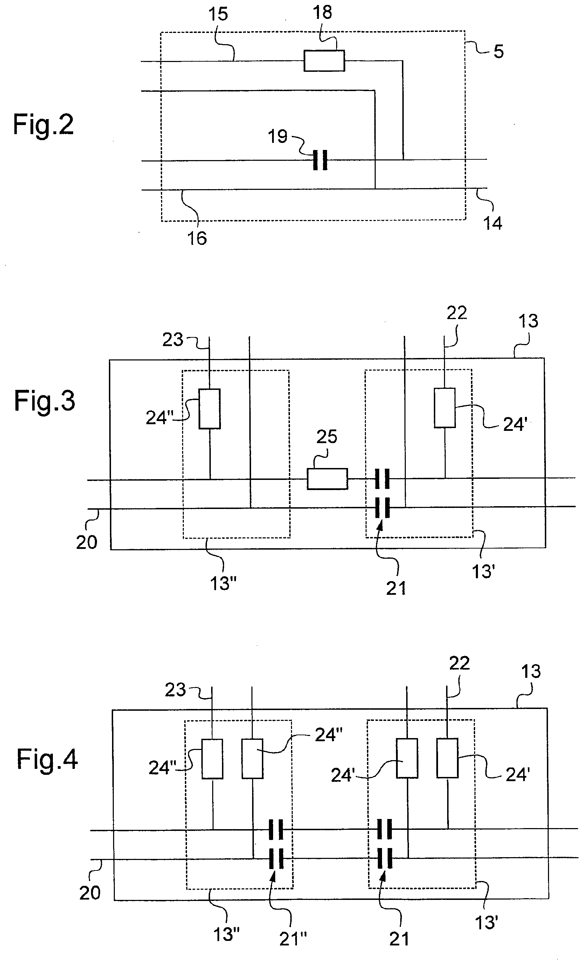

En référence à la figure 2, l'organe d'aiguillage 5 comprend une première ligne 14 reliée au connecteur 6 et donc au câble 11 et à laquelle sont reliées une deuxième ligne 15 reliée au module d'alimentation 4 et une troisième ligne 16 reliée au module de transmission 3. La deuxième ligne 15 est équipée d'un filtre de fréquence de puissance 18 et la troisième ligne 16 est équipée d'un filtre de fréquence porteuse 19. Le filtre de fréquence de puissance 18 est une inductance montée sur un des deux conducteurs formant la deuxième ligne 15 et le filtre de fréquence porteuse 19 est un condensateur monté sur un des deux conducteurs formant la troisième ligne 16. L'organe d'aiguillage 5 est ainsi agencé pour amener le courant d'alimentation au module d'alimentation 4 et le signal de données au module de transmission 3.

L'organe d'aiguillage 13 comprend lui aussi un diplexeur courant alternatif 13' du côté de l'entrée du convertisseur 12 et un diplexeur courant continu 13" du côté de la sortie du convertisseur 12.

En référence à la figure 3, l'organe d'aiguillage 13 selon le premier mode de réalisation comprend une ligne de dérivation 20 reliant le connecteur 8 au connecteur 9 et incorporant un filtre de fréquence porteuse généralement désigné en 21. Le convertisseur 12 est relié à la ligne de dérivation 20 de part et d'autre du filtre de fréquence porteuse 21 par une ligne d'entrée 22 et une ligne de sortie 23 du convertisseur 12. L'organe d'aiguillage 13 comprend un filtre de fréquence de puissance 24' monté sur un des deux connecteurs formant la ligne d'entrée 22 et un filtre de fréquence de puissance 24" monté sur un des deux connecteurs formant la ligne de sortie 23. Le filtre de fréquence de puissance 24', 24" est une inductance et le filtre de fréquence porteuse 21 est un condensateur monté sur chacun des deux conducteurs formant la ligne de dérivation 20. Une inductance 25 est montée sur un des conducteurs de la ligne de dérivation 20 entre le filtre de fréquence porteuse 21 et la ligne de sortie 23. L'organe d'aiguillage 13 est ainsi agencé pour extraire et dériver le signal de données par rapport au convertisseur 12 : le signal de données transite sur la ligne de dérivation 20 sans passer par le convertisseur 12 et est superposé au courant d'alimentation transformé (c'est-à-dire continu) en sortie du convertisseur 12 dans le sens de la réception des signaux de données par le dispositif.

Lors de l'émission de signaux de données par le dispositif, les signaux de données transitent depuis le module de transmission 3 jusqu'au réseau d'alimentation en passant par l'organe d'aiguillage 5, le connecteur 6, le câble 10, le connecteur 8, la ligne de dérivation 21, l'organe d'aiguillage 13, et le connecteur 9.

Un exemple de dimensionnement est donné ci-après en relation avec les caractéristiques suivantes :
- fréquence de la porteuse comprise entre 1 MHz et 2 MHz (ici 1,5 MHz) ;
- réseau d'alimentation ayant une tension de 240 V et une fréquence de 50 Hz,
- dispositif alimenté en 12 V avec une consommation de 2 A,
- dispositif appartenant à la classe II selon la norme EN 60950.

Dans ces conditions, l'inductance des filtres de fréquence de puissance 24 a une valeur minimale de 160 µHy et les condensateurs formant les filtres de fréquence porteuse 21 ont une capacité maximale de 2 nF. L'inductance 25 a une valeur d'environ 11 µHy de manière à créer une résonance avec les condensateurs formant les filtres de fréquence porteuse 21.

En référence à la figure 4 et selon le deuxième mode de réalisation de l'organe d'aiguillage 13, la ligne de dérivation 20 reliant le connecteur 8 au connecteur 9 incorpore deux filtres de fréquence porteuse 21', 21" montés en série sur chacun des deux conducteurs formant la ligne de dérivation 20. Des filtres de fréquence de puissance 24', 24" sont montés sur chacun des deux connecteurs formant la ligne d'entrée 22 et la ligne de sortie 23 respectivement. Chaque filtre de fréquence de puissance 24', 24" est une inductance et chaque filtre de fréquence porteuse 21', 21" est un condensateur.

Bien entendu, l'invention n'est pas limitée aux modes de réalisation décrits mais couvre toute variante entrant dans le champ de l'invention telle que définie par les revendications.

En particulier, le circuit peut être différent de ceux décrits. Tout composant électronique adapté à la réalisation d'une des fonctions indiquées peut être substitué au composant mentionné dans la description en relation avec cette fonction. Les filtres peuvent être des composants différents les uns des autres.

Dans le premier mode de réalisation, chaque conducteur peut être équipé d'une inductance 24 ou 25. Les condensateurs peuvent être remplacés par d'autres filtres passifs ou par des filtres actifs.

Dans le deuxième mode de réalisation, une inductance sur chaque ligne est suffisante pour constituer les filtres de fréquence porteuse.

Les valeurs numériques n'ont été données qu'à titre indicatif et d'autres valeurs peuvent évidemment être utilisées.

L'unité centrale peut comprendre le module de transmission et le module d'alimentation, ou être séparée de ceux-ci... Le module d'alimentation peut être omis si le courant provenant du bloc d'alimentation possède des caractéristiques adéquates pour son alimentation.

Le connecteur 8 peut être omis, le câble 10 sortant directement du bloc d'alimentation.

Le bloc d'alimentation peut être agencé pour être connecté directement à la prise murale sans câble.

## Revendications

1. Dispositif comprenant, d'une part, un boîtier (1) contenant une unité centrale (2) électronique, et d'autre part, un bloc d'alimentation externe (7) relié à l'unité centrale par un câble électrique (10) et pourvu d'un organe de connexion (9, 11) à un réseau d'alimentation (100) fournissant un courant d'alimentation alternatif et un signal de données superposé et d'un convertisseur (12) pour transformer le courant d'alimentation d'alternatif à continu, **caractérisé en ce que** le boîtier comprend un module de transmission (3) de données par courant porteur, **en ce que** le convertisseur est relié à l'organe de connexion (9, 11) et au câble électrique (10) par un premier organe d'aiguillage (13) qui extrait et dérive le signal de données par rapport au convertisseur, et **en ce que** le module et l'unité centrale sont reliés au câble électrique par un deuxième organe d'aiguillage (5) pour séparer le courant d'alimentation transformé et le signal de données et amener le courant d'alimentation à l'unité centrale et le signal de données au module de transmission, le premier organe d'aiguillage (13) comprenant une ligne de dérivation (20) reliant l'organe de connexion (9, 11) au câble électrique (10) et incorporant un filtre de fréquence porteuse (21), le convertisseur (12) étant relié à la ligne de dérivation de part et d'autre du filtre de fréquence porteuse par une ligne d'entrée (22) et une ligne de sortie (23) du convertisseur, l'organe d'aiguillage comprenant des filtres de fréquence de puissance (24', 24") montés respectivement sur la ligne d'entrée et la ligne de sortie.

2. Dispositif selon la revendication 1, dans lequel au moins une inductance (25) est montée sur la ligne de dérivation (20) entre le filtre de fréquence porteuse (21) et la ligne de sortie (23).

3. Dispositif selon la revendication 1, dans lequel le deuxième organe d'aiguillage (3) comprend une première ligne (14) reliée au câble électrique (10) et à laquelle sont reliées une deuxième ligne (15) reliée à l'unité centrale et une troisième ligne reliée au module de transmission (5), la deuxième ligne étant équipée d'un filtre de fréquence de puissance (18) et la troisième ligne étant équipée d'un filtre de fréquence porteuse (19).

4. Dispositif selon l'une quelconques des revendications précédentes, dans lequel au moins un des filtres de fréquence porteuse (19, 21) est un filtre passif tel qu'un condensateur.

5. Dispositif selon l'une quelconques des revendications précédentes, dans lequel au moins un des filtres de fréquence de puissance est une inductance.

6. Dispositif selon l'une quelconques des revendications précédentes, dans lequel chaque ligne (14, 15, 16, 20, 22, 23) comportant deux conducteurs, un filtre (18, 19, 21, 24', 24") est monté sur au moins un des conducteurs.

## Patentansprüche

1. Vorrichtung, umfassend einerseits ein Gehäuse (1), das eine elektronische Zentraleinheit (2) enthält, und andererseits einen externen Versorgungsblock (7), der mit der Zentraleinheit über ein elektrisches Kabel (10) verbunden und mit einem Verbindungselement (9, 11) zur Verbindung mit einem Versorgungsnetz (100) versehen ist, das einen Wechselstrom und ein überlagertes Datensignal liefert, sowie mit einem Konverter (12) zum Umwandeln des Wechselstroms in einen Gleichstrom, **dadurch gekennzeichnet, dass** das Gehäuse ein Datenübertragungsmodul (3) zur Datenübertragung mittels Trägerstrom umfasst, dass der Konverter mit dem Verbindungselement (9, 11) und dem elektrischen Kabel (10) über ein erstes Weichenelement (13) verbunden ist, das das Datensignal extrahiert und in Bezug auf den Konverter ableitet, und dass das Modul und die Zentraleinheit mit dem elektrischen Kabel über ein zweites Weichenelement (5) verbunden sind, um den umgewandelten Versorgungsstrom und das Datensignal zu trennen und den Versorgungsstrom zur Zentraleinheit und das Datensignal zum Übertragungsmodul zu leiten, wobei das erste Weichenelement (13) eine Abzweigleitung (20) umfasst, die das Verbindungselement (9, 11) mit dem elektrischen Kabel (10) verbindet und ein Trägerfrequenzfilter (21) aufnimmt, wobei der Konverter (12) mit der Abzweigleitung zu beiden Seiten des Trägerfrequenzfilters über eine Eingangsleitung (22) und eine Ausgangsleitung (23) des Konverters verbunden ist, wobei das Weichenelement Leistungsfrequenzfilter (24', 24") umfasst, die auf der Eingangsleitung bzw. der Ausgangsleitung angebracht sind.

2. Vorrichtung nach Anspruch 1, bei der mindestens eine Induktivität (25) auf der Abzweigleitung (20) zwischen dem Trägerfrequenzfilter (21) und der Ausgangsleitung (23) angebracht ist.

3. Vorrichtung nach Anspruch 1, bei der das zweite Weichenelement (3) eine erste Leitung (14) umfasst, die mit dem elektrischen Kabel (10) verbunden und an die eine zweite Leitung (15) angeschlossen ist, die mit der Zentraleinheit verbunden ist, sowie eine dritte Leitung, die mit dem Übertragungsmodul (5) verbunden ist, wobei die zweite Leitung mit einem Leistungsfrequenzfilter (18) ausgestattet ist und die dritte Leitung mit einem Trägerfrequenzfilter (19) ausgestattet ist.

4. Vorrichtung nach einem der vorhergehenden Ansprüche, bei der mindestens eines der Trägerfrequenzfilter (19, 21) ein passives Filter, wie z. B. ein Kondensator, ist.

5. Vorrichtung nach einem der vorhergehenden Ansprüche, bei der mindestens eines der Leistungsfrequenzfilter eine Induktivität ist.

6. Vorrichtung nach einem der vorhergehenden Ansprüche, bei der jede Leitung (14, 15, 16, 20, 22, 23) zwei Leiter umfasst, wobei ein Filter (18, 19, 21, 24', 24") auf mindestens einem der Leiter angebracht ist.

## Claims

1. Device comprising firstly a box (1) containing an electronic central unit (2), and secondly an external power supply block (7) connected to the central unit by an electric cable (10) and provided both with a connection member (9, 11) for connection to a power supply network (100) delivering an alternative power supply current and a data signal superposed thereon, and with a converter (12) for converting the alternative power supply current to direct current, the device being **characterized in that** the box includes a carrier current data transmission module (3), **in that** the converter is connected to the connection member (9, 11) and to the electric cable (10) via a first diverter member (13) that extracts and diverts the data signal relative to the converter, and **in that** the module and the central unit are connected to the electric cable by a second diverter member (5) for separating the converted power supply current and the data signal and bringing the power supply current to the central unit and the data signal to the transmission module, the first diverter member (13) comprising a shunt connection line (20) connecting the connection member (9, 11) to the electric cable (10) and incorporating a carrier frequency filter (21), the converter (12) being connected to the shunt connection line on either side of the carrier frequency filter by an inlet line (22) and an outlet line (23) of the converter, the diverter member having power frequency filters (24', 24") connected respectively in the inlet and outlet lines.

2. Device according to claim 1, wherein at least one inductor (25) is connected in the shunt connection line (20) between the carrier frequency filter (21) and the outlet line (23).

3. Device according to claim 1, wherein the second diverter member (3) comprises a first line (14) connected to the electric cable (10) and having connected thereto a second line (15) connected to the central unit and a third line connected to the transmission module (5), the second line being fitted with a power frequency filter (18) and the third line being fitted with a carrier frequency filter (19).

4. Device according to any one of the preceding claims, wherein at least one of the carrier frequency filters (19, 21) is a passive filter such as a capacitor.

5. Device according to any one of the preceding claims, wherein at least one of the carrier frequency filters is an inductor.

6. Device according to any one of the preceding claims, wherein each line (14, 15, 16, 20, 22, 23) that comprises two conductors has a filter (18, 19, 21, 24', 24") mounted in at least one of its conductors.
